# EUROPEAN PATENT APPLICATION

(11) **EP 1 648 132 A1**
(43) Date of publication of application: **19.04.2006**
(21) Application number: 04292452.2
(22) Date of filing: 14.10.2004
(51) Int. Cl.: H04L 29/06, H04M 3/42, H04M 3/53, H04L 12/58

(54) **Method and system to handle call transfer with consistent billing**

(71) Applicant: ALCATEL, 75008 Paris (FR)
(72) Inventor: Villars, Sébastien, 67400 Illkirch (FR); Grostete, Yann, 29200 Brest (FR); Baruch, Sauveur, 29460 Daoulas (FR)
(74) Representative: Rausch, Gabriele

(57) **Abstract**

The present invention concerns a method for defining certain features of a return call performed over Internet Protocol resulting from a call back action initiated by a caller of a messaging system, method characterised by specifying at least one billing characteristic for said return call, such as a billing number, account name or number or similar information, in the transfer command sent to the system and comprising the callee number needed to set up the call back.

## Description

The present invention concerns the field of the telecommunications, in particular features related to call transfers, and provides a method for defining certain features of a return call in an IP telephony call back action, and a unified messaging system able to perform said method.

Nowadays, messaging systems have been proposed which incorporate various features or functions, in particular systems based on VXML (Voice Extended Markup Language) and which provide a calling back function of the sender of an email or a voice mail.

VXML is a markup language used to create voice applications that run on phone devices. It is used as an interface to the Internet and authorises speech applications to have access to the same information as web pages based on HTML.

The user provides input by speaking or pressing touchtone keys on his telecommunication terminal and output (requested information) is delivered in audio form to the user.

VXML is described and defined in the (W3C) Voice XML 2.0 specification, which lists a number of commands or tags used to define, to set up, to characterise and to control a VXML application.

Such voice messaging systems can be accessed by any phone device or terminal and are composed of an audio interface combined with software that interprets Voice XML and can interact with web servers. Said systems are based on platforms incorporating Voice XML interpreter, speech recogniser and Text-to-Speech engine and located at provider sites, and generally associated to PBX systems.

Today, when a user initiates a call back sender action from a VXML voice mail system, making use of a predefined transfer tag or command, the call or return call (to the sender of the email or the voice mail) is charged to the concerned voice mail system or to the concerned infrastructure part of the PBX and not to the caller.

Moreover, when the number or the name of the caller realising a call back sender action is to be provided for display at the callee's (or sender's) end, the voice mail system actually provides its own identification number or name.

Such a lack of correct handling of the caller's identity and personal parameters, in the present status of the standard, is not satisfactory.

It is an aim of the present invention to overcome at least the first quoted restriction or drawback, preferably both, not only for a VXML messaging system but more generally for a messaging system incorporating a call back sender function.

To that end, the present invention proposes a method for defining certain features of a return call performed over Internet Protocol resulting from a call back action initiated by a caller of a messaging system, method characterised by specifying at least one billing characteristic for said return call, such as a billing number, account name or number or similar information, in the transfer command sent to the system and comprising the callee number needed to set up the call back.

Preferably, the used transfer command consists of a VXML transfer tag and the added billing characteristic consists of a billing number set by the caller.

According to an advantageous embodiment of the invention, the transfer command also comprises the caller number or name to be displayed at the callee's end, said caller number or name being set by the caller and being identical to or different from the billing number or name and/or the calling number or name of the actually used terminal.

The invention will not be described in more details in relation to a messaging system consisting of a VXML voice mail system comprising a call back function for email and/or voice mail senders.

As can be understood from the foregoing, the basic idea of the invention is to add at least one, preferably two, further properties or features to the transfer tag or command used in the call back sender function.

Thus, the transfer command or tag comprises two more information, the first one being the number or name on which the billing should be done (QMCDU or business phone number in the PBX system of the identified user) and the second one being the number or name to be sent as caller's identification to the callee's terminal.

For example, a transfer tag of the present Voice XML standard could then be structured by extension as follows:
< transfer dest = "A" from = "B" remotedisplay = "C" / >,
wherein A is the callee's number, B is the number or name to be billed and C is the caller's identity number or name to be displayed at the callee's end.

As a practical illustrative example, one can imagine a user having an allocated business phone (number: "7777") and a messaging box in an associated VXML voice mail system.

Said user can call said voice mail system from any telecommunication terminal (for example from his wife's cellular phone - "06 xx xx xx xx"), then listen to his voicemails (after having been identified and authorised and decide to call back a sender on phone "03 xx xx xx xx".

The following tags could be then be exchanged:
<?xml>
<vxml>
...
<transfer dest="03xxxxxxxxx" from="7777" remotedisplay="7777"/>
...
</vxml>

In this example, "7777" is carried as a remote display information (not the cellular phone number), and will be charged for the call.

On the newly defined tag, the voice browser of the system will be able to identify and read the three following information: destination, billing and remote display. With these information it will use its adaptation layer to transmit them to the associated PBX system.

In case of a full IP media server, custom fields on SIP could be used to transmit billing and remote display information to the SIP gateway of the PBX.

The present invention also encompasses a unified messaging system based on voice XML comprising a call back function of a sender of an email or a voice mail, characterised in that it comprises means able to handle, to interpret and to execute a transfer tag or command including in addition to the callee number of the return call, also at least one billing characteristic for said return call, such as a billing number, a billing account or similar information.

Such a unified messaging system can, for example, be the one integrated into the Alcatel Omnitouch Unified Communication system and being able to perform the method described before.

With the proposed solution, the PBX system performs the billing, and this billing is consistent with the one applied to the direct phone calls of the user.

Furthermore, Voice XML developers can choose the remote display information they want to provide.

Moreover if restriction policies are set up in your PBX, by providing a number to charge, it is possible to check in the PBX the validity of the billing number with the running restriction policies.

The present invention is, of course, not limited to the preferred embodiment described herein, changes can be made or equivalents used without departing from the scope of the invention.

## Claims

1. Method for defining certain features of a return call performed over Internet Protocol resulting from a call back action initiated by a caller of a messaging system, method **characterised by** specifying at least one billing characteristic for said return call, such as a billing number, account name or number or similar information, in the transfer command sent to the system and comprising the callee number needed to set up the call back.

2. Method according to claim 1, **characterised in that** the used transfer command consists of a VXML transfer tag and **in that** the added billing characteristic consists of a billing number set by the caller.

3. Method according to claim 1 or 2, **characterised in that** the transfer command also comprises the caller number or name to be displayed at the callee's end, said caller number or name being set by the caller and being identical to or different from the billing number or name and/or the calling number or name of the actually used terminal.

4. Method according to anyone of claims 1 to 3, **characterised in that** the messaging system is a VXML voice mail system comprising a call back function for email and/or voice mail senders.

5. Unified messaging system based on voice XML comprising a call back function of a sender of an email or a voice mail, **characterised in that** it comprises means able to handle, interpret and execute a transfer tag or command including in addition to the callee number of the return call, also at least one billing characteristic for said return call, such as a billing number, a billing account or similar information.

6. Unified messaging system according to claim 5, **characterised in that** the transfer command or tag also comprises the caller number to be displayed at the callee's end, said caller number being set by the caller and being identical to or different from the billing number and/or the calling number of the actually used terminal.

7. Unified messaging system according to claim 5 or 6, **characterised in that** it is able to perform the method according to anyone of claim 1 to 4.

## Amended claims

### Amended claims in accordance with Rule 86(2) EPC.

**1.** Method for defining certain features of a return call performed by a caller to a callee over Internet Protocol resulting from a call back action initiated by a caller of a messaging system, method **characterised by** specifying at least one billing characteristic for said return call, such as a billing number, account name or number or similar information, in the transfer command consisting of a Voice Extended Markup Language / VXML / transfer tag sent to the system and comprising the callee number needed to set up the call back.

**2.** Method according to claim 1, **characterised in that** the added billing characteristic consists of a billing number set by the caller.

**3.** Method according to claim 1 or 2, **characterised in that** the transfer command also comprises the caller number or name to be displayed at the callee's end, said caller number or name being set by the caller and being identical to the billing number or name or the calling number or name of the actually used terminal.

**4.** Method according to claim 1 or 2, **characterised in that** the transfer command also comprises the caller number or name to be displayed at the callee's end, said caller number or name being set by the caller and being different from the billing number or name or the calling number or name of the actually used terminal.

**5.** Method according to anyone of claims 1 to 4, **characterised in that** the messaging system is a VXML voice mail system comprising a call back function for email and/or voice mail senders.

**6.** Unified messaging system based on voice XML comprising a call back function of a sender of an email or a voice mail, **characterised in that** it comprises means able to handle, interpret and execute a transfer command consisting of a Voice Extended Markup Language / VXML /transfer tag including in addition to the callee number of the return call to be performed by a caller to a callee, also at least one billing characteristic for said return call, such as a billing number, a billing account or similar information.

**7.** Unified messaging system according to claim 6, **characterised in that** the transfer command or tag also comprises the caller number to be displayed at the callee's end, said caller number being set by the caller and being identical to the billing number or the calling number of the actually used terminal.

**8.** Unified messaging system according to claim 6, **characterised in that** the transfer command or tag also comprises the caller number to be displayed at the callee's end, said caller number being set by the caller and being different from the billing number or the calling number of the actually used terminal.

**9.** Unified messaging system according to anyone of claims 6 to 8, **characterised in that** it comprises means to perform the method according to anyone of claim 1 to 5.
